# EUROPEAN PATENT SPECIFICATION

(11) **EP 2 868 854 B1**
(45) Date of publication and mention of the grant of the patent: **17.04.2019**
(21) Application number: 14188957.6
(22) Date of filing: 15.10.2014
(51) Int. Cl.: E05F 15/635, E05F 15/643

(54) **Drive arrangement for a window or door**
Antriebsanordnung für ein Fenster oder eine Tür
Dispositif d'entraînement pour une fenêtre ou une porte

(30) Priority: 31.10.2013 GB 201319233
(43) Date of publication of application: 06.05.2015
(73) Proprietor: Glazing Vision Limited, Diss, Norfolk IP22 4RG (GB)
(72) Inventor: White, Darren, Norwich, Norfolk NR14 7SA (GB)
(74) Representative: Sandersons

(56) References cited:
- WO-A1-01/59243
- DE-A1-102009 018 965
- DE-U1-202013 005 489

## Description

The present invention relates to a drive arrangement for a window or door unit. The invention relates particularly, but not exclusively, to window units in the form of roof lights.

Window or door units typically have a static frame, which is installed in the structure of a building, and a moving (i.e. pivoting or sliding) frame, which comprises the window or door. The moving frame can be moved from an open position in which an opening through the static frame is exposed to a closed position in which the moving frame fully engages with the static frame so as to cover the opening with the window or door. It is known to open and close such windows and doors using an electric motor or hand crank that is drivingly coupled to a transmission that moves the moving frame. This provides a convenient way to open and close windows or doors, particularly windows or doors that are heavy and/or out of reach, such as roof lights.

In some known arrangements, the transmission that moves the moving frame comprises a worm drive. As will be appreciated, worm drives generally have only one direction of power transmission, i.e. the worm of the worm drive can drive the pinion of the worm drive, but the pinion cannot drive the worm. Accordingly, in these known arrangements, the motor or hand crank drives the worm of the worm drive, which in turn drives the pinion of the worm drive, which in turn moves the moving frame. This allows the motor or hand crank to move the moving frame in both the opening and closing directions. However, since the pinion cannot drive the worm, it is generally not possible to open and close the window or door manually by moving the moving frame if and when that is desirable.

In other known arrangements, the transmission that moves the moving frame comprises a bidirectional power transmission such as a rack and pinion. In these arrangements, the electric motor or hand crank drives a pinion (either directly or indirectly via gearing and/or a belt), which in turn drives a toothed rack or toothed belt, which in turn moves the moving frame. Since the toothed rack or toothed belt can also drive the pinion, it is possible both to manually open and to manually close the window or door by moving the moving frame.

However, this can pose a security and safety risk. For example, the window or door may be opened manually against the inherent counterforce applied by the electric motor or hand crank, thereby potentially allowing unauthorised access to the building. Similarly, the window or door may be closed manually by an unauthorised person when it is instead desirable to keep the window or door open. Thus, in these other known arrangements, there is no ability to prevent unauthorised manual opening or closing of the window or door by moving the frame in situations where one or other of those activities is undesirable.

DE 20 2013 005 489 U1 discloses a drive arrangement according to the preamble of claim 1.

It is a principal aim of this invention to provide a drive arrangement for moving a movable frame of a window or door unit that overcomes the disadvantages of the known arrangements.

Thus, according to the invention there is provided a drive arrangement for moving a movable frame of a window or door unit, the drive arrangement comprising:
- a drive shaft drivingly coupled to a rotary transmission;
- a motor drivingly coupled to the drive shaft;
the rotary transmission being operable for coupling the motor to the movable frame to effect opening and closing movement thereof; the drive arrangement further including:
- a freewheel clutch having an inner race and an outer race arranged such that one of the inner and outer race is rotatable relative to the other of the inner and outer race in one direction but is not relatively rotatable in the other direction, wherein the drive shaft is drivingly coupled to one of the inner and outer race such that the one of the inner and outer race rotates upon operation of the motor to effect the movement of the movable frame; and
- a device comprising a selectively retractable pin, and the other of the inner and outer race comprises one or more holes for receiving the pin, wherein the device is operable for selectively allowing or preventing rotation of the other of the inner and outer race whereby opening and closing movement of the movable frame by the motor is possible when the device allows said rotation of the other of the inner and outer race in both directions when the motor is operating, but movement of the movable frame is possible in only one direction when the device prevents said rotation of the other of the inner and outer race when the motor is not operating.

It will be understood that the one of the inner and outer race of the freewheel clutch (which may be, for example, a sprag clutch or ratchet) can be rotated in a first direction relative to the other of the inner and outer race but cannot be rotated in a second direction relative to the other of the inner and outer race. Thus, when the other of the inner and outer race of the freewheel clutch is allowed to rotate, the one of the inner and outer race is free to rotate in both directions, and so the moving frame can be moved in both the opening and closing directions. However, when the other of the inner and outer race of the freewheel clutch is prevented from rotating, the one of the inner and outer race can only rotate in the first direction, and so the moving frame is restricted to being moved in only one direction (i.e. only the opening or only the closing direction).

The invention therefore allows a window or door to be both opened and closed during normal operation, but also allows the window or door selectively only to be closed, or in alternative embodiments selectively only to be opened, during abnormal operation, for example power failure in the case of an electric motor powered transmission.

In preferred embodiments, the one of the inner and outer race rotates in the first direction when the moving frame is being moved from the open position to the closed position, and rotates in the second direction when the moving frame is being moved from the closed position to the open position. Thus, when the other of the inner and outer race of the clutch is prevented from rotating, the moving frame can only be moved from the open position to the closed position. These arrangements can be used to prevent unauthorised opening of a window or door by manually moving the frame, for example so as to prevent that window or door being opened manually by an unauthorised person that wishes to gain access to a building, whilst also allowing the window or door to be closed manually.

Alternatively, the one of the inner and outer race could rotate in the first direction when the moving frame is being moved from the closed position to the open position, and could rotate in the second direction when the moving frame is being moved from the open position to the closed position. Thus, when the other of the inner and outer race of the clutch is prevented from rotating, the moving frame can only be moved from the closed position to the open position. These alternative arrangements can be used to prevent unauthorised closing of a window or door by manually moving the frame when it is desirable to keep the window or door open.

The device for selectively allowing or preventing rotation of the other of the inner and outer race comprises a selectively retractable pin, and the other of the inner and outer race comprises one or more holes for receiving the pin when not retracted. In preferred embodiments, the device comprises a solenoid for selectively retracting the pin against a resilient force, such as a force provided by a spring. Embodiments may also or instead comprise a pull knob for manually retracting the pin against a or the resilient force. Other embodiments are contemplated in which different devices, such as clamps or brakes, are used to prevent rotation of the other of the inner and outer race.

The drive arrangement further comprises a motor (or alternatively a hand crank) that is coupled to the transmission (either directly or indirectly via gearing and/or a belt) so as to effect movement of the movable frame between the open and closed positions, the transmission being drivable by the motor and the moving frame being drivable by the transmission. In particularly preferred embodiments, the motor comprises an electric motor, which could be battery powered or mains powered.

The device for selectively allowing or preventing rotation of the other of the inner and outer race allows rotation of that race when the motor is operating. This may be achieved by providing power to the device (e.g. to retract the pin of the abovementioned solenoid) at the same time as providing power to the motor. Thus, the motor is able to move the moving frame in both directions. Conversely, the device prevents rotation of the other of the inner and outer race when the motor is not operating. This may be achieved by disconnecting power from the device (e.g. to redeploy the pin of the abovementioned solenoid) at the same time as disconnecting power from the motor. Thus, the moving frame can be moved in only one direction when the motor is not operating, i.e. the moving frame can be moved in only one direction manually by moving the frame. These embodiments are particularly useful in dealing with situations when it is desirable to allow a window or door only to be closed, or only to be opened, in the event of failure or non-operation of the motor.

As will be appreciated from the above, the transmission comprises a transmission that is capable of bidirectional power transmission, i.e. the transmission drives, and is also drivable by, the moving frame. In particularly preferred embodiments, the transmission comprises one or more (e.g. two) pinions that can be drivingly coupled to, and can be driven by, the moving frame. In particularly preferred embodiments, the one or more pinions can each be drivingly coupled to, and can be driven by, a toothed rack or toothed belt that is coupled to the moving frame.

The drive arrangement further comprises a drive shaft drivingly coupled to, and/or drivable by, the transmission. The motor is drivingly coupled to the drive shaft, for example by gearing and/or via a belt, and/or the drive shaft is drivingly coupled to, and/or drivable by, the one of the inner and outer race of the clutch.

In preferred embodiments, the transmission is coupled to the one of the inner and outer race such that the one of the inner and outer race is rotated by the transmission upon movement of the moving frame. Alternatively, the one of the inner and outer race may be coupled or coupleable to the moving frame other than via the transmission.

The drive arrangement may form part of a moving window or door unit having a static frame and a moving frame. In preferred embodiments, the moving frame is a sliding frame which forms part of a sliding window or door unit. In particularly preferred embodiments, the window unit is a roof light.

The invention also extends to a method of operating a drive arrangement as described above, the method comprising selectively allowing or preventing rotation of the other of the inner and outer race.

Although the invention has been described above in the context of moving frames for window or door units, and is particularly suited to use in this context, the concept of a selectively operable freewheel clutch could be applied to other circumstances where it is sometimes desirable to allow rotation of a shaft in both directions but sometimes desirable to allow rotation of the shaft only in one direction.

By way of example only, specific embodiments of the invention will now be described in detail with reference being made to the accompanying drawings in which:
Figure 1 is a perspective view of a drive arrangement according to an embodiment of the invention;
Figure 2 is a close-up view of part of the drive arrangement of Figure 1;
Figure 3 is a side view of the drive arrangement of Figure 1; and
Figure 4 is a perspective view of the drive arrangement of Figure 1 when forming part of a window unit.

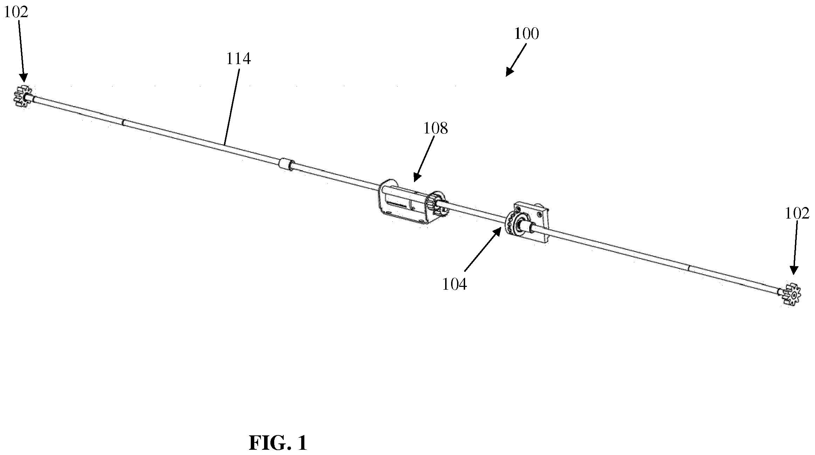

Figure 1 is a perspective view of a drive arrangement 100 for a sliding frame of a window unit (not shown). In this embodiment, the window unit is a roof light. The drive arrangement 100 comprises a transmission comprising two pinions 102 that are respectively coupled to the sliding frame via toothed belts or toothed racks (not shown).

The drive arrangement 100 further comprises a freewheel clutch 104 having an inner race and an outer race. In this embodiment, the clutch 104 is a sprag clutch. The inner race of the freewheel clutch 104 can be rotated in a first direction relative to outer race but cannot be rotated in a second direction relative to the outer race. To achieve this, the clutch 104 comprises a plurality of ball bearings between the inner race and the outer race and a corresponding plurality of projections between the inner race and the outer race. The ball bearings and projections are provided such that the inner race can be rotated in the first direction relative to the outer race and such that the inner race cannot be rotated in the second direction relative to outer race.

The transmission 102 is drivingly coupled to the inner race of the clutch 104 via a drive shaft 114. In this embodiment, when the sliding frame moves in the closed direction, the inner race of the clutch 104 rotates in the first direction, and when the sliding window moves in the open direction, the inner race of the freewheel clutch 104 rotates in the second direction. The drive arrangement 100 further comprises an electric motor 108 that is drivingly coupled to the transmission 102 via the drive shaft 114. Thus, the motor can be used to open and close the window via the transmission 102.

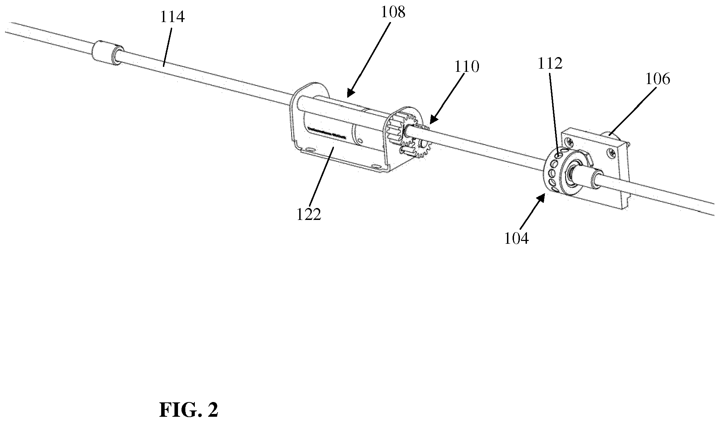

Figure 2 is a close-up view of part of the drive arrangement 100 of Figure 1. Figure 2 shows that the motor 108 is housed in a housing 122 and is drivingly coupled to the drive shaft 114 via gearing 110. The housing 122 is mounted to the static frame of the window unit. Figure 2 also shows that the drive arrangement 100 further comprises a device for selectively allowing or preventing rotation of the outer race of the freewheel clutch 104. In this embodiment, the device comprises a solenoid 106 having a moveable pin. The outer periphery of the outer race of the freewheel clutch 104 comprises a plurality of holes 112 for receiving the moveable pin.

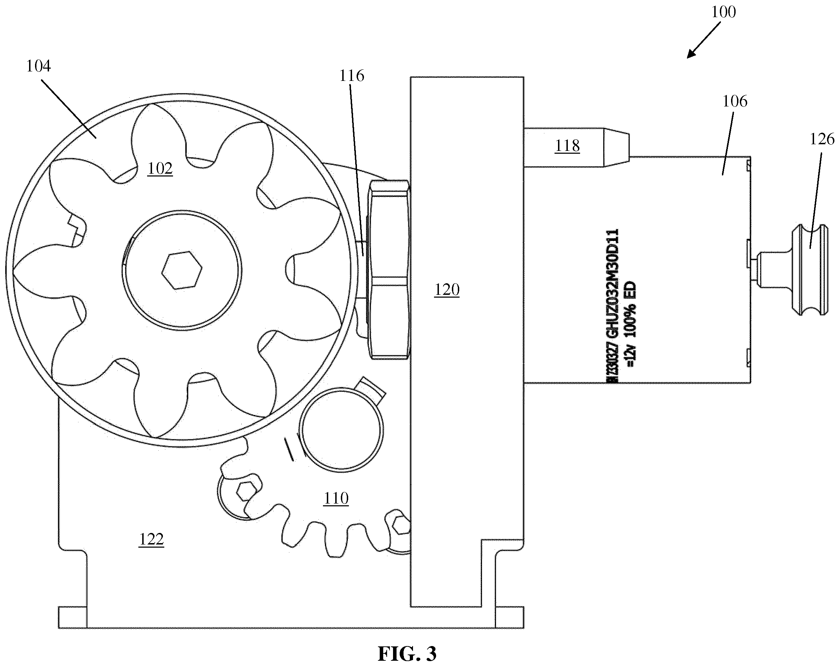

Figure 3 is a side view of the drive arrangement 100 of Figure 1. Figure 3 shows, in the foreground, one pinion of the transmission 102 for moving the moving frame of the window unit. Figure 3 also shows the moveable pin 116 of the solenoid 106 when engaged with the outer race of the freewheel clutch 104. The solenoid 106 is mounted to a bracket 120, which in turn can be mounted to the static frame of the window unit by screws 118. Figure 3 also shows a pull knob 126 fitted to the back of the moveable pin 116 which enables the moveable pin 116 to be manually retracted should the solenoid fail to operate. The pull knob 126 is positioned so as to be accessible only from within the building in which the window unit is installed when the window is closed. Figure 3 also shows, in the background, the housing 122 and gearing 110 described above.

In this embodiment, the solenoid 106 allows rotation of the outer race of the freewheel clutch 104 only when the motor 108 is operating. This is achieved by providing power to the solenoid 106 so as to retract the pin 116 at the same time as providing power to the motor 108. Thus, the motor is able to move the moving frame in both directions. Conversely, the solenoid 106 prevents rotation of the outer race of the freewheel clutch 104 when the motor 108 is not operating. This is achieved by not providing power to the solenoid 106 when the motor 108 is not operating. Thus, the inner race of the freewheel clutch 104, and consequently the moving frame, can be moved manually in only one direction. In this embodiment, the moving frame can only be moved manually from the open position to the closed position. This provides a more secure window in the event of non-operation of the motor 108.

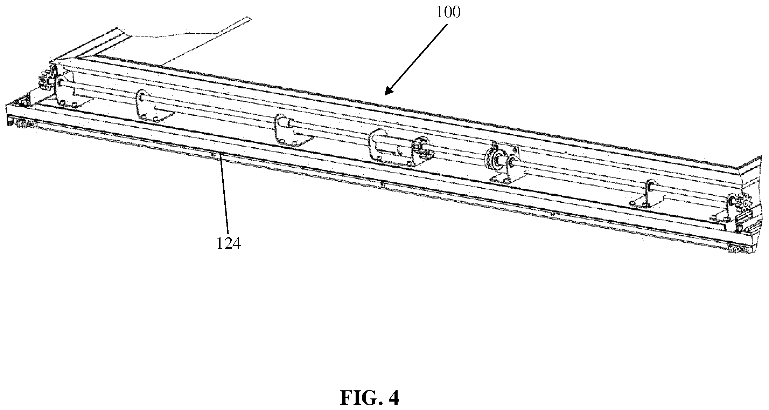

Figure 4 is a perspective view of the drive arrangement 100 when mounted to a static frame 124 of a window unit.

## Claims

1. A drive arrangement (100) for moving a movable frame of a window or door unit, the drive arrangement comprising:
- a drive shaft (114) drivingly coupled to a rotary transmission (102) of the drive arrangement (100);
- a motor (108) drivingly coupled to the drive shaft (114);
the rotary transmission (102) being operable for coupling the motor (108) to the movable frame to effect opening and closing movement thereof; wherein the drive arrangement (100) further includes
- a freewheel clutch (104) ;
**characterized in that** the freewheel clutch comprises an inner race and an outer race arranged such that one of the inner and outer race is rotatable relative to the other of the inner and outer race in one direction but is not relatively rotatable in the other direction, wherein the drive shaft (114) is drivingly coupled to one of the inner and outer race such that the one of the inner and outer race rotates upon operation of the motor (108) to effect movement of the movable frame; and **in that** the drive arrangement (100) further comprises a device (106) comprising a selectively retractable pin (116), and the other of the inner and outer race comprises one or more holes (112) for receiving the pin when not retracted, wherein the device (106) is operable for selectively allowing or preventing rotation of the other of the inner and outer race whereby opening and closing movement of the movable frame by the motor (108) is possible when the device (106) allows said rotation of the other of the inner and outer race in both directions when the motor (108) is operating, but movement of the movable frame is possible in only one direction when the device (106) prevents said rotation of the other of the inner and outer race when the motor (108) is not operating.

2. A drive arrangement (100) as claimed in claim 1, wherein the freewheel clutch (104) is a sprag clutch or ratchet.

3. A drive arrangement (100) as claimed in claim 1 or 2, wherein the one of the inner and outer race rotates in the said one direction when the movable frame is being moved from the open position to the closed position.

4. A drive arrangement (100) as claimed in claim 1 or 2, wherein the one of the inner and outer race rotates in the said one direction when the movable frame is being moved from the closed position to the open position.

5. A drive arrangement (100) as claimed in claim 1, wherein the locking device (106) comprises a solenoid for selectively retracting the pin (116) against a resilient force.

6. A drive arrangement (100) as claimed in any one of the preceding claims, wherein the motor (108) comprises one of a motor or hand crank that is coupled to the transmission (102) so as to effect opening and closing movement of the movable frame of the window or door unit.

7. A drive arrangement (100) as claimed in any one of the preceding claims, wherein the transmission (102) further comprises one or more pinions for coupling to a toothed rack or belt that is coupled to the movable frame of the window or door unit.

8. A moving window or door unit having a static frame and a movable frame, the window or door unit comprising a drive arrangement (100) as claimed in any one of the preceding claims.

9. A method of operating a drive arrangement (100) as claimed in any one of claims 1-7, the method comprising:
selectively allowing or preventing rotation of the other of the inner and outer race.

## Patentansprüche

1. Antriebsanordnung (100) zum Bewegen eines bewegbaren Rahmens einer Fenster- oder einer Türeinheit, wobei die Antriebsanordnung umfasst:
- eine Antriebswelle (114), die antriebsmäßig mit einer Drehübersetzung (102) der Antriebsanordnung (100) gekoppelt ist;
- einen Antrieb (108), der antriebsmäßig mit der Antriebswelle (114) gekoppelt ist;
wobei die Drehübersetzung (102) betreibbar ist, um den Antrieb (108) an den bewegbaren Rahmen zu koppeln, um Öffnungs- und Schließbewegungen desselben zu bewirken;
wobei die Antriebsanordnung (100) ferner umfasst
- eine Freilaufkupplung (104);
**dadurch gekennzeichnet, dass** die Freilaufkupplung einen inneren Laufring und einen äußeren Laufring aufweist, die so angeordnet sind, dass einer des inneren und äußeren Laufrings relativ zu dem anderen des inneren und äußeren Laufrings in eine Richtung, aber nicht in die andere Richtung drehbar ist,
wobei die Antriebswelle (114) antriebsmäßig mit einem des inneren und äußeren Laufrings gekoppelt ist, so dass der eine des inneren und äußeren Laufrings bei Betrieb des Antriebs (108) dreht, um eine Bewegung des bewegbaren Rahmens zu bewirken; und
dass die Antriebsanordnung (100) ferner eine Vorrichtung (106) mit einem selektiv zurückziehbaren Stift (116) umfasst, und dass der andere des inneren und äußeren Laufrings ein oder mehrere Löcher (112) aufweist, um den Stift aufzunehmen, wenn dieser nicht zurückgezogen ist,
wobei die Vorrichtung (106) betreibbar ist, um selektiv eine Drehung des anderen des inneren und äußeren Laufrings freizugeben oder zu unterbinden, wodurch Öffnungs- und Schließbewegungen des bewegbaren Rahmens durch den Antrieb (108) möglich sind, wenn die Vorrichtung (106) bei Betrieb des Antriebs (108) die Drehung des anderen des inneren und äußeren Laufrings in beide Richtungen freigibt, wobei jedoch bei Nicht-Betrieb des Antriebs (108) eine Bewegung des bewegbaren Rahmens nur in eine Richtung möglich ist, wenn die Vorrichtung (106) die Drehung des anderen des inneren und äußeren Laufrings unterbindet.

2. Antriebsanordnung (100) nach Anspruch 1, wobei die Freilaufkupplung (104) eine Klemmkörperfreilaufkupplung oder ein Sperrklinkenfreilauf ist.

3. Antriebsanordnung (100) nach Anspruch 1 oder 2, wobei der eine des inneren und äußeren Laufrings in die besagte eine Richtung dreht, wenn der bewegbare Rahmen aus der Offenstellung in die Schließstellung bewegt wird.

4. Antriebsanordnung (100) nach Anspruch 1 oder 2, wobei der eine des inneren und äußeren Laufrings in die besagte eine Richtung dreht, wenn der bewegbare Rahmen aus der Schließstellung in die Offenstellung bewegt wird.

5. Antriebsanordnung (100) nach Anspruch 1, wobei die Verriegelungsvorrichtung (106) einen Solenoiden zum selektiven Zurückziehen des Stiftes (116) gegen eine elastische Kraft umfasst.

6. Antriebsanordnung (100) nach einem der vorhergehenden Ansprüche, wobei der Antrieb (108) einen Motor oder eine Handkurbel umfasst, die an die Übersetzung (102) gekoppelt sind, um Öffnungs- und Schließbewegungen des bewegbaren Rahmens der Fenster- oder Türeinheit zu bewirken.

7. Antriebsanordnung (100) nach einem der vorhergehenden Ansprüche, wobei die Übersetzung (102) ferner ein oder mehrere Ritzel zum Ankuppeln an eine Zahnstange oder einen Zahnriemen aufweist, der mit dem bewegbaren Rahmen der Fenster- oder Türeinheit gekoppelt ist.

8. Eine bewegbare Fenster- oder Türeinheit mit einem statischen Rahmen und einem bewegbaren Rahmen, wobei die Fenster- oder Türeinheit eine Antriebsanordnung (100) nach einem der vorhergehenden Ansprüche aufweist.

9. Verfahren zum Betrieb einer Antriebsanordnung (100) nach einem der Ansprüche 1 bis 7, wobei das Verfahren vorsieht:
selektives Freigeben oder Unterbinden der Drehung des anderen des inneren und äußeren Laufrings.

## Revendications

1. Dispositif d'entraînement (100) pour déplacer un cadre mobile d'une unité de fenêtre ou de porte, le dispositif d'entraînement comprenant :
- un arbre d'entrainement (114) couplé par entraînement à une transmission rotative (102) du dispositif d'entrainement (100) ;
- un moteur (108) couplé par entraînement à l'arbre d'entrainement (114) ;
la transmission rotative (102) pouvant être actionnée pour coupler le moteur (108) au cadre mobile pour effectuer un mouvement d'ouverture et de fermeture de celui-ci ;
dans lequel le dispositif d'entrainement (100) comprend en outre
- un embrayage à roue libre (104) ;
**caractérisé en ce que** l'embrayage à roue libre (104) comprend
une bague intérieure et une bague extérieure agencées de sorte que l'une des bagues intérieure et extérieure est apte à tourner par rapport à l'autre des bagues intérieure et extérieure dans une direction mais n'est pas apte à tourner de manière relative dans l'autre direction, dans lequel l'arbre d'entrainement (114) est couplé par entraînement à l'une des bagues intérieure et extérieure de sorte que ladite bague intérieure ou extérieure tourne lors de l'actionnement du moteur (108) pour déplacer le cadre mobile ;
et **en ce que** le dispositif d'entrainement (100) comprend en outre un dispositif (106) comprenant un une broche sélectivement rétractable (116), et l'autre des bagues intérieure et extérieure comprend un ou plusieurs trous (112) pour recevoir la broche lorsqu'elle n'est pas rétractée,
dans lequel le dispositif (106) est apte à fonctionner pour permettre ou empêcher sélectivement la rotation de l'autre bague intérieure et extérieure au moyen duquel un mouvement d'ouverture et de fermeture du cadre mobile par le moteur (108) est possible quand le dispositif (106) permet ladite rotation de l'autre des bagues intérieure et extérieure dans les deux directions lorsque le moteur (108) fonctionne, mais le mouvement du cadre mobile est possible dans une seule direction lorsque le dispositif (106) empêche ladite rotation de l'autre des bagues intérieure et extérieure lorsque le moteur (108) n'est pas en fonctionnement.

2. Dispositif d'entraînement (100) selon la revendication 1, dans lequel l'embrayage à roue libre (104) est un embrayage à roue libre ou à cliquet.

3. Dispositif d'entraînement (100) selon la revendication 1 ou 2, dans lequel ladite bague intérieure ou extérieure tourne dans ladite une direction lorsque le cadre mobile est déplacé depuis la position ouverte vers la position fermée.

4. Dispositif d'entraînement (100) selon la revendication 1 ou 2, dans lequel ladite bague intérieure ou extérieure tourne dans ladite une direction lorsque le cadre mobile est déplacé depuis la position fermé vers la position ouverte.

5. Dispositif d'entraînement (100) selon la revendication 1, dans lequel le dispositif de verrouillage (106) comprend un solénoïde pour rétracter sélectivement la broche (116) contre une force élastique.

6. Dispositif d'entraînement (100) selon l'une quelconque des revendications précédentes, dans lequel le moteur (108) comprend une manivelle de moteur ou à main qui est couplée à la transmission (102) de sorte à effectuer un mouvement d'ouverture et de fermeture du cadre mobile de l'unité de fenêtre ou de porte.

7. Dispositif d'entraînement (100) selon l'une quelconque des revendications précédentes, dans lequel la transmission (102) comprend en outre un ou plusieurs pinions pour le couplage à une crémaillère ou une courroie qui est couplée au cadre mobile de l'unité de fenêtre ou de porte.

8. Unité de fenêtre ou de porte mobile ayant un cadre statique et un cadre mobile, l'unité de fenêtre ou de porte comprenant un dispositif d'entraînement (100) selon l'une quelconque des revendications précédentes.

9. Procédé de fonctionnement d'un dispositif d'entraînement (100) selon l'une quelconque des revendications 1 à 7, le procédé comprenant les étapes consistant à :
autoriser ou empêcher de manière sélective la rotation de l'autre bague intérieure et extérieure.
